# EUROPEAN PATENT SPECIFICATION

(11) **EP 1 968 377 B1**
(45) Date of publication and mention of the grant of the patent: **27.01.2010**
(21) Application number: 06824272.6
(22) Date of filing: 20.11.2006
(51) Int. Cl.: A01K 1/06

(54) **FEED BARRIER FOR LIFESTOCK**
FRESSGITTER FÜR VIEHBESTAND
CORNADIS POUR BÉTAIL

(30) Priority: 18.11.2005 NL 1030468
(43) Date of publication of application: 17.09.2008
(73) Proprietor: WEELINK, Johannes Martinus Willibrordus, 9481 AD Vries (NL)
(72) Inventor: WEELINK, Johannes Martinus Willibrordus, 9481 AD Vries (NL)
(74) Representative: De Hoop, Eric
(86) International application number: PCT/NL2006/000579
(87) International publication number: WO 2007/058529

(56) References cited:
- WO-A-99/51085

## Description

### BACKGROUND OF THE INVENTION

The invention relates to a feed barrier intended for animals of a specific category of animals, such as for instance dairy cattle, fatting calves, pigs, fatting bulls and the like. Feed barriers especially intended for each of these specific categories are made and supplied, as the dimensions of the animals of each category may strongly vary.

Such a feed barrier is for instance known from applicant's patent application WO-A-99/51085. The feed barrier described in this patent application at least comprises a girder and a number of posts arranged thereon, of which posts each time a pair bounds a feeding location for an animal, wherein the pair of posts each are rotatable about a substantially vertical centre line between an open position in which there is a relatively large space between the posts and a closed position in which the space between the posts is smaller, wherein the pair of posts have a curved shape adapted to the chest of the animals of said category. As soon as the animal sticks its head through the relatively large space between the posts, the posts are pushed into the closed position by the chest of the animal. The barrier may furthermore be provided with locking means with which the posts can be locked in the closed position, so that the animal secures itself in the feeding barrier. As the posts have a curved shaped adapted to the animal's chest, the animal's comfort is increased and physical damage can be effectively avoided.

Although the feed barrier according to patent application WO-A-99/51085 improves the comfort of the animals to a large degree with respect to the feed barriers known up until then, it is an object of the invention to further increase said comfort.

### SUMMARY OF THE INVENTION

The invention as defined in claim 1 provides a feed barrier comprising a left and a right post bounding a feeding location for an animal, wherein the left and the right post are rotatable about a first and second centre line, respectively, between an open and a closed position, and wherein the left and the right post have a curved shape, wherein a part of the left and right post in the open position are bent away from each other in order to form a passage for the animal's head, and in the closed position are bent towards each other according to a shape substantially adapted to the shoulder blades and/or neck of the animal.

The feed barrier according to the invention is intended to offer improved comfort to animals that exert a pressure on the feed barrier, for instance when the animal tries to move its head upwards along the posts placed in the closed position, or when the animal exerts a forward pressure on the feed barrier for instance when taking in fodder. By adapting the shape of the posts according to the invention to the shoulder blades and/or neck of animals of a specific category of livestock, an improved distribution of said pressure of the feed barrier on the shoulder blades and/or neck of the animals placed between the posts in closed position, is achieved. As a result the risk of possible injuries to the shoulders and/or neck of the animal can be reduced and the comfort of the animals can be improved.

The known posts in the feed barrier are adapted for obtaining a proper abutment of the posts against the chest of the animals for improving the comfort of the animals. The comfort is improved in particular when the animal secures itself in the feeding location. The inventor realised that the known shape of the posts is intended to distribute a forward pressure of the animal's chest against the feed barrier, and that the known feed barrier should furthermore prevent the animal from escaping from the feed barrier.

Contrary to the known posts the shape of the posts according to the invention is intended to improve the comfort of the animals particularly when the animal reaches far to obtain fodder. In that case the animal namely tends to lean against the feed barrier with its full weight. Due to the shape of the posts according to the invention the pressure of the feed barrier is better distributed over the shoulders and/or neck of the animal, as described above.

According to a further aspect the left and right post in the closed position are bent towards each other, wherein a section of the part facing the lower side of the feed barrier is bent concavely. In one embodiment the distance between the left and right post in the section becomes substantially continuously smaller as a function of the distance to the lower side of the feed barrier.

In one embodiment, in the closed position, the course of the section of the left and right post also comprises a component that is oriented substantially transverse to feed barrier. Preferably the section runs continuously in a transverse direction as a function of the distance to the lower side of the feed barrier. Preferably the posts in the closed position run towards the rear side of the animal and towards each other, following the shoulder blades and the narrower neck of the animal. As a result a secured animal cannot escape and the pressure forces are effectively distributed over the animal's shoulder blades and/or neck.

In one embodiment the left and/or right post is curved in three or more planes that are substantially parallel to the centre line. Said embodiment offers sufficient degrees of freedom to the posts according to the invention to effectively distribute the pressure forces. For instance the lower part of the posts is bent away from the centre line in a first plane into a curved shape adapted to the animal's chest, the second part of the posts is bent in a second plane that is at a first angle, preferably an acute angle, to the first plane into a curved shape adapted to the shoulder blades and/or neck of the animal, and a third part of the posts is bent back in the direction of the centre line in a third plane that is at a second angle, preferably acute angle, to the second plane.

In one embodiment the feed barrier comprises an upper girder and a lower girder, wherein the left and the right post with their upper and lower ends are rotatably connected to the upper and lower girder. In one embodiment thereof the part having a shape adapted to the shoulder blades and/or neck of the animal is situated near the upper girder, wherein the left and right post at a side of the part or below the part facing the lower girder in the open position are bent towards each other for forming a stop part for an animal's chest. This embodiment combines the shape of the known posts with the shape of the posts according to the invention. In that case a lower part of the posts has a curved shape adapted to the animal's chest and an upper part has a curved shape adapted to the animal's shoulder blades and/or neck. A feed barrier according to this embodiment is particularly advantageous because such a feed barrier is able to distribute the pressure over the entire front (chest, shoulders and neck) of the animal.

In one embodiment the stop part for the animal's chest of the left and right post, in the closed position extends substantially beyond a plane defined by the upper and lower girder. In one embodiment the part of the left and right post having a shape adapted to the shoulder blades and/or neck of the animal, in the closed position also extends substantially beyond a plane defined by the upper and lower girder.

In one embodiment the first centre line is spaced apart from the second centre line. In one embodiment the first and second centre line are oriented substantially vertical and/or parallel. In one embodiment the left and right post comprise a substantially mirror-symmetrical curved shape with respect to each other.

In one embodiment the feed barrier comprises locking means for detachably locking the posts in the closed position. In that way the animals can be secured in the feed barrier. In an advantageous further embodiment the locking means are self-locking. That means that when an animal pushes a post into the closed position, the locking means rotation-fixedly fixate the post in said locked position. In that way the posts can be used as catching posts in a self-locking feed barrier, wherein the animals are able to secure themselves in the feed barrier.

In one embodiment the left and right post each at an end thereof facing the locking means comprise an unround part, preferably integrally formed with the post. In that case the locking means preferably comprise at least one locking girder that is placed so as to be movable and which can be brought into an operative connection with the unround end of the post for locking the rotation of the post.

In one embodiment each rotatable post is provided with a related locking girder. In an alternative embodiment a pair of rotatable posts is provided with one locking girder, wherein the girder thus extends to near the ends of both posts.

In a simple embodiment the unround end comprises a flattened part and the locking girder comprises one or more recesses for at least partially accommodating the flattened part.

In case of one locking girder per pair of rotatable posts, the locking girder at a side facing the left and right post, comprises a recess for in the closed position of the left and right post rotation-fixedly connecting the flattened part of the posts to the locking girder.

In one embodiment the locking girder is movable in a direction towards the left and/or right post for rotation-fixedly connecting the flattened ends of the posts to the locking girder, and in a direction away from the left and/or right post for uncoupling the flattened ends of the posts and the locking girder. In that way the locking means are easily activated and deactivated by moving the locking girder.

In a simple embodiment the locking girder is placed in a guide, wherein the guide guides the movement of the locking girder preferably along a third centre line that is substantially parallel to the first and/or second centre line. The locking girder is able to engage onto the flattened ends of the posts due to the sliding along the guide. In one embodiment the flattened parts have been placed at the ends of the posts and the locking girder falls over the flattened ends of the posts wherein said flattened ends are accommodated in the recesses of the locking girder.

In one embodiment having one locking girder per pair of rotatable posts, the locking girder is connected to the feed barrier so as to be movable substantially between the first and second centre line. Preferably said locking girder is connected to the feeding barrier at one position thereof, which position preferably is situated substantially in between the first and second centre line.

In one embodiment the feed barrier comprises manual operating means and/or a drive for moving the locking girder, at least for uncoupling the flattened ends of the posts and the locking girder. In one embodiment the drive comprises an electric, pneumatic or hydraulic drive. Manual operation renders a simple operation at the location of the feed barrier possible, whereas the drive also renders a remote operation and/or automated operation possible.

In one embodiment the manual operating means and/or the drive of various feeding locations can be operated individually and/or jointly, so that at choice at one or several feeding locations animals can be secured or indeed released.

In one embodiment the feed barrier further comprises a rail extending along the feed barrier, which rail is operatively connected to the locking girder for from one end of the feed barrier moving the locking girder along the guide. In this embodiment the locking girders of a number of feeding locations may furthermore be operatively connected to the rail, so that from the end of the feed barrier all connected locking means can be jointly unlocked.

In one embodiment the locking girder extends to above the left and right post. Particularly when the first and second centre line have been substantially vertically placed, the locking girder, due to gravity, may be pulled in the direction of the flattened ends of the posts and the locking girder driven by gravity may fall over the ends of the left and right post, at least in the closed position thereof, wherein the left and right post are rotation-fixedly connected to the locking girder.

In one embodiment the feed barrier comprises resistance means cooperating with the unround ends of the left and right post for offering resistance against rotation of the posts. Particularly against rotation out of the open position thereof.

In a simple embodiment the resistance means comprise at least one bar spring abutting the unround, preferably flattened end of the left and/or right post. In case of rotation out of the open position the bar spring exerts a spring force on said ends which spring force attempts to push the posts back to the open position. Said spring forces provide a moment (force x arm) onto the ends of the posts, urging the posts to the open position.

In one embodiment the resistance means comprise at least two bar springs in between which the unround, and preferably flattened end of the left and/or right post has been placed, wherein the bar springs have been placed for exerting a pressure force substantially on either side against the post, at least when the post rotates out of the open position: In one embodiment the bar springs have been placed substantially parallel, wherein the mutual distance between the bar springs preferably is smaller than the diameter of the posts, preferably exceeding or equalling the thickness of the flattened end of the left and/or right post. In the open position the two bar springs abut the level parts of the flattened ends of the posts. In case of rotation out of the open position a first side of the flattened end will be pushed against the first bar spring and a second side of the flattened end situated across the first side will be pushed against the second bar spring. The bar springs exert a spring force on the first and second side that attempts to push the sides back to the open position. Said spring forces provide a torque on the posts which urges the posts to the open position.

In one embodiment the unround, and preferably flattened ends of the posts have been formed and/or placed such that in the closed position as well the bar springs exert a torque or moment on the posts which pre-biasses the posts to the open position. As a result the bar springs will push the posts from the closed position, after unlocking, to the open position.

There may also be provided, but not according to the claimed invention, a locking device for a feed barrier comprising a left and a right post bounding a feeding location for an animal, wherein the left and the right post are rotatable about a first and second centre line, respectively, between an open position and a closed position, wherein the left and right post each at an end thereof facing the locking means comprise an unround part, preferably integrally formed with the post, wherein the locking device comprises at least one movable locking girder for in the closed position detachably locking both the left and the right post, wherein the locking girder is movable in a direction towards the left and/or right post for rotation-fixedly connecting the unround ends of the posts to the locking girder, and in a direction away from the left and/or right post for uncoupling the unround ends of the posts and the locking girder.

In one embodiment the locking device further comprises manual operating means and/or a drive for moving the locking girder, at least for uncoupling the unround ends of the posts and the locking girder.

In one embodiment the drive comprises an electric, pneumatic or hydraulic drive.

There may also be provided, but not according to the claimed invention, resistance means for a feed barrier comprising a left and a right post bounding a feeding location for an animal, wherein the left and the right post are rotatable about a first and second centre line, respectively, between an open and a closed position, wherein the left and right post each comprise an unround part at an end thereof, preferably integrally formed with the post, wherein the resistance means are placed in operative connection with the unround ends of the left and right post for offering resistance to rotation of the posts, particularly to rotation out of the open position thereof.

In a simple embodiment the resistance means comprise at least one bar spring abutting the unround, preferably flattened end of the left and/or right post.

The aspects and measures described in this description and claims of the application and/or shown in the drawings of this application may where possible also be used individually. Said individual aspects, such as the locking device and the resistance means such as the bar springs, and other aspects, may be the subject of divisional patent applications relating thereto. This particularly applies to the measures and aspects described per se in the sub claims.

### SHORT DESCRIPTION OF THE DRAWINGS

The invention will be elucidated on the basis of a number of exemplary embodiments shown in the attached drawings, in which:
Figure 1 shows a schematic view in perspective of a feed barrier according to the state of the art;
Figures 2A, 2B and 2C show a front, top and side view, respectively, of a feed barrier according to the invention in the open position;
Figures 3A, 3B and 3C shows a front, top and side view, respectively, of a feed barrier according to the invention in the closed position;
Figures 4A, 4B and 4C show a front, side and top view, respectively, of a post according to the invention in the open position;
Figures 5A and 5B show a front view (partially in cross-section) and a view in transverse section, respectively, of an upper girder of a feed barrier according to the invention; and
Figures 6A and 6B show a front and a top view, respectively, of the resistance means.

### DETAILED DESCRIPTION OF THE DRAWINGS

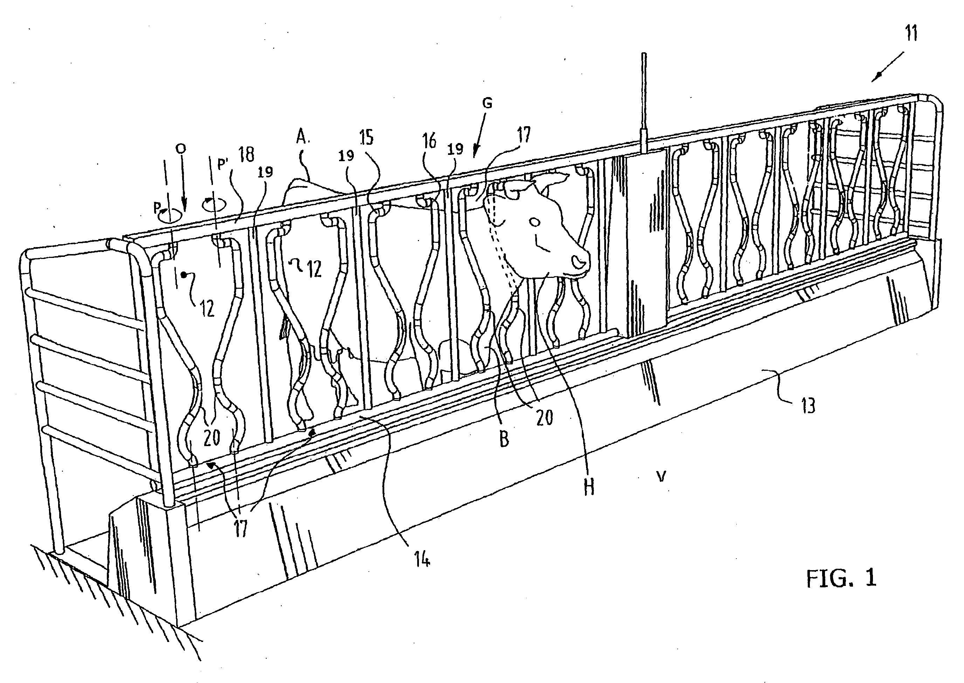

The feed barrier 11 shown in figure 1 is intended for a specific category of livestock, in this case cattle and more particularly dairy cattle A. The dimensions of dairy cattle are within relatively narrow margins, so that the feed barrier 11 can be properly adapted to animals of this category.

The feed barrier 11 has been placed with a lower girder 14 thereof on a frame 13. The feed barrier 11 further comprises an upper girder 18 which by means of fixed posts 19 is connected to the lower girder 14. The feed barrier 11 further comprises a number of pairs of curved posts 15, 16 that are rotatable about a substantially vertical axis. Between each pair of posts 15, 16 a feeding location 17 is formed where an animal A is able to stick its head H through the feed barrier 11 in order to take in fodder lying at the front side V of the barrier 11. The posts 15, 16 are rotatable according to the arrows P, P' between an open position O and a closed position G, respectively. In the open position O the curved parts 20 of the posts 15, 16 are oriented towards each other and in the closed position G said parts 20 have been moved apart and are more or less parallel to each other. The posts 15, 16, as shown in figure 1 have been bent in one plane.

When the animal A has stuck its head H through the hole 12, it will push its chest B against the curved parts 20, as a result of which the posts 15, 16 are rotated from the open position O to the closed position G.

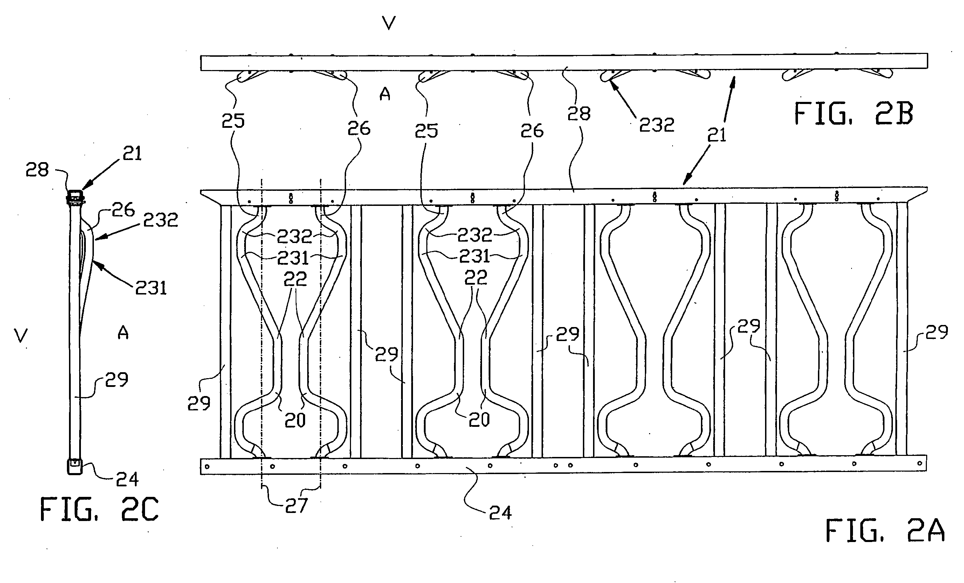

Figure 2 shows an exemplary embodiment of a feed barrier 21 according to the invention, wherein the curved posts 25, 26 have been placed in the open position. Such a feed barrier 21 may on the one hand have been placed on a similar frame 13, as shown in figure 1, and on the other hand on or between two pillars. Contrary to the posts 15, 16 of the known feed barrier 11 the posts 25, 26 according to the invention have been bent substantially from position 22 to the rear side A of the feed barrier 21. This is clearly shown in the top view of figure 2B and the side view of figure 2C. From position 22 the posts 25, 26 have been bent at an obtuse angle from the plane of the feed barrier 21, wherein the posts 25, 26 have been bent in upward direction further and further beyond the plane of the feed barrier 21 until substantially at a position 231. From position 231 the posts 25, 26 run substantially parallel to the plane of the feed barrier 21, as shown in the side view of figure 2C, until substantially at a position 232. From position 232 the posts 25, 26 bend back again to the centre line 27 related to the post 25, 26. The part between the positions 231 and 232 ensures a sufficiently large opening for the head H of the animal A.

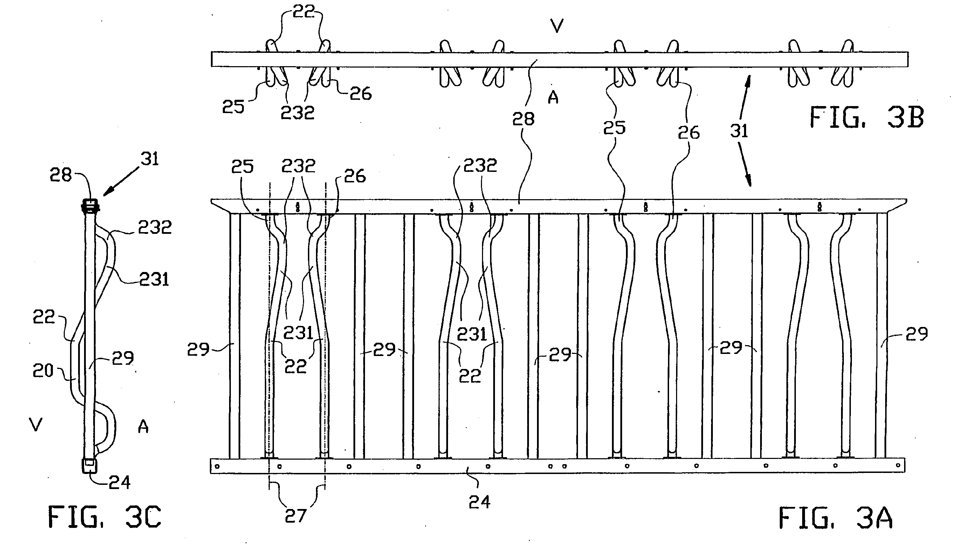

In figure 3 the exemplary embodiment of a feed barrier 31 according to figure 2 is shown in which the bent posts 25, 26 have been placed in the closed position. In this situation the posts 25, 26 have been rotated over an angle of substantially 90 degrees about the centre lines 27 with respect to the open position according to figure 2. Contrary to the posts 15, 16 of the known feed barrier 11 the posts 25, 26 according to the invention have been bent substantially from position 22 at an obtuse angle to the rear side A of the feed barrier 31 and towards each other. This is clearly shown in the side view of figure 3C and the front view of figure 3A. From position 22 the posts 25, 26 have been bent in upward direction inclined towards the rear side A and towards each other until substantially at a position 231. The section between position 22 and 231 thus is bent concavely, as shown in figure 3A. From position 231 the posts 25, 26 run substantially parallel to the plane of the feed barrier 21, as shown in the side view of figure 3C, until substantially at a position 232. From the position 232 the posts 25, 26 bend back again to the centre line 27 related to the post 25, 26. In the closed position, the posts 25, 26 in the upper part (from position 22), thus run rearwards and towards each other for following the shoulder blades and narrower neck of the animal A. As a result not only the comfort of the animal A is improved, but secured animals A, also those with a small head H, cannot escape and a secured animal A is secured indeed.

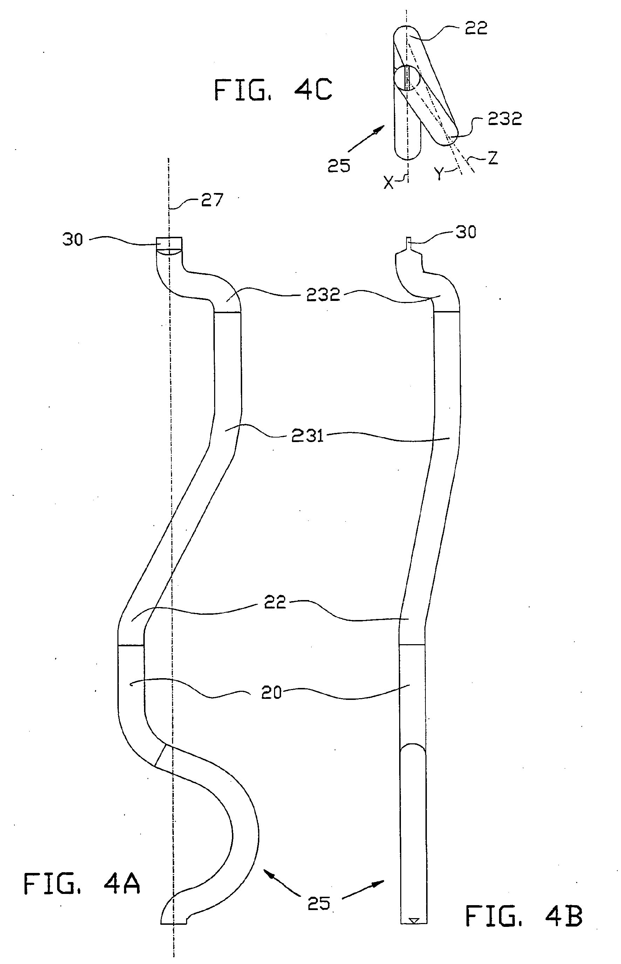

The shape of this exemplary embodiment of the post 25 according to the invention is shown in various views in figure 4. The other post 26 of the pair is a mirror-symmetrical embodiment of the post 25 of figure 4 (mirrored in the plane X of figure 4C). The lower part of the post 25 up to position 22, comprising the curved part 20, is bent in a plane X. From position 22 up to position 232 the post 25 is bent in a plane Y, wherein the plane Y has been placed at an acute angle to the plane X as shown in figure 4C. From position 232 the post 25 is bent in plane Z, wherein the plane Z has been placed at an acute angle to the plane Y and the plane X as shown in figure 4C.

Said exemplary embodiment is particularly suitable for cattle. For livestock of another category, such as for instance pigs, the shape of the post will also be curved according to a shape substantially adapted to the shoulder blades and/or neck of the animal. It will be clear to the expert that in case of another physical build of an average animal of the livestock category in question for which the feed barrier is designed, the shape of the posts will have to be adapted accordingly.

Figure 4 further shows that at least the upper end of the post 25 has been provided with a flattened part 30 that has been integrally formed with the post 25, for instance by means of a punch treatment. This flattened part 30 serves as engagement for the exemplary embodiments of the locking means and the resistance means as described below.

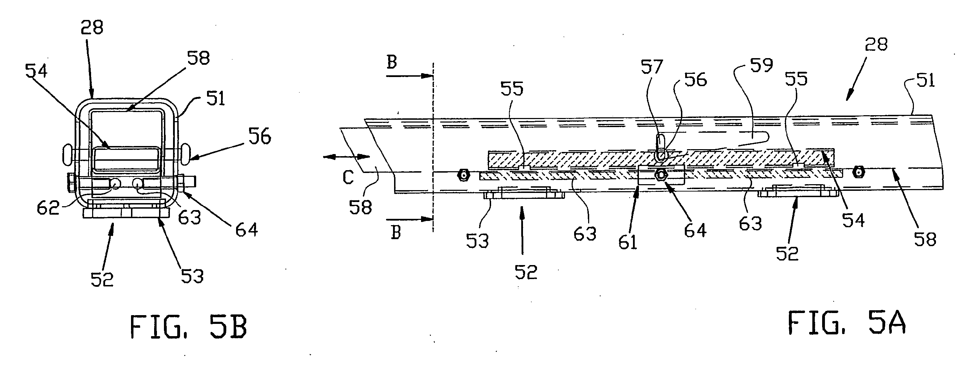

Figure 5 shows an exemplary embodiment of the upper girder 28 including locking means according to the invention. In this exemplary embodiment the upper girder 28 is designed like a tube 51 which at its lower side 52 is provided with openings for passing the ends 30 of the posts 25, 26 (not shown) through. In said openings synthetic bearings 53 (for instance nylon slide bearings) have been placed that are able to accommodate the posts 25, 26 so as to be rotatable.

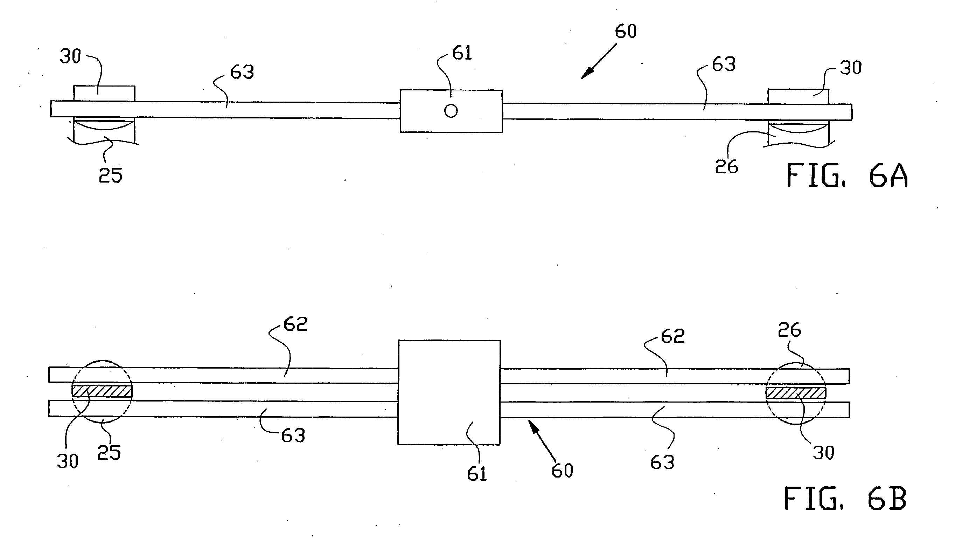

Above the synthetic bearings 53 resistance means 60 have been arranged in the tube 51, as shown in detail in figure 6. Said resistance means 60 comprise a block 61, preferably made of a synthetic material, in which two steel springs with circular cross-section 62, 63 have been placed so that they project on both sides of the block 61 over a distance to above the bearings 53 of the posts 25, 26. If placed in the bearings 53, the flattened parts 30 of the posts 25, 26 in the open position extend between the springs 62, 63 as shown in figure 6B. As a result the springs 62, 63 will counteract a rotation of the posts 25, 26 and exert a spring force on the posts 25, 26 in order to push them to the open position of figure 6B. The block 61 is fixedly connected to the tube 51 by means of a screwed connection 64.

Above said resistance means 60 a tubular locking girder 54 has been placed which above the openings 52 has been provided with recesses 55 for accommodating the flattened ends 30 of the posts 25, 26 therein. The recesses 55 have been aligned such that the girder 54 is able to fall over the flattened ends 30 of the posts if the posts are rotated into the closed position. The recesses 55 ensure a substantially rotation-fixed connection between the ends of the posts 25, 26 and the locking girder 54.

The locking girder 54 is movably attached to the tube 51 via a pawl 56 that is fixedly connected to the girder 54 and which extends through a substantially vertically oriented slot 57 in the tube 51. By pushing the pawl 56 upward (optionally manually or by means of a drive) the girder 54 can be moved away from the ends 30 of the posts 25, 26 for unlocking the posts. After unlocking and after the animal A has left the feeding location, the posts 25, 26 can be rotated back substantially a quarter of a turn to the open position as shown in figure 2. By operating the pawl 56 the locking of an individual feeding location can be operated.

The exemplary embodiment as shown in figure 5 has also been provided with a mechanism for central locking and/or unlocking of the feeding locations along the feed barrier. For that purpose a rail, particularly a U-shaped rail 58 has been placed in the tube 51 so as to be movable along the tube 51. At the location of the pawl 56 the rail 58 has been provided with a slotted hole 59. At its bottom side the slotted hole 59 has been provided with an inclined part pushing the pawl 56 upward when the rail is pulled in the direction C. By providing the feed barrier with a handle or a drive (not shown) at its end for reciprocally moving the rail 59 in the direction C, all locking means coupled with the rail 59 can be jointly locked or unlocked, without walking along the front of the barrier being necessary.

It will be clear that the pawl 57 can also be operatively connected to a suitable drive for moving the locking girder 54 in vertical direction (along the slotted hole 57). The device may for instance be provided with an electric, pneumatic or hydraulic or other type of drive with which the feed barrier can be automatically operated.

It will furthermore be clear that the locking girder 54 may also be equipped with two spaced apart pawls (not shown) placed near the rotatable posts 25, 26. In that case the tube 51 has been provided with two substantially vertically oriented slots, each near the upper side of the posts 25, 26. In that case the posts 25, 26 can be individually unlocked by operating the individual pawls.

It will furthermore be clear that the locking means may also comprise a separate locking girder for each rotatable post 25, 26, wherein by means of a related pawl each locking girder has been placed in a slot in the tube 51 situated near the upper side of the related post.

Whereas the invention has been shown and described referring to certain exemplary embodiments thereof, it will be clear to the expert that various adaptations in shape and details can be made without deviating from the scope of protection of the invention as defined by the attached claims.

## Claims

1. Feed barrier (21) comprising a left (25) and a right (26) post bounding a feeding location for an animal,
wherein the left (25) and the right (26) post are rotatable about a first and second centre line (27), respectively, between an open and a closed position, and
wherein the left (25) and the right (26) post have a curved shape, wherein a part (231) of the left and right post in the open position are bent away from each other in order to form a passage for the animal's head, and in the closed position are bent towards each other according to a shape substantially adapted to the shoulder blades and/or neck of the animal.

2. Feed barrier according to claim 1,
wherein a section of the part (231) facing the lower side (22) of the feed barrier is bent concavely.

3. Feed barrier according to claim 2, wherein the distance between the left (25) and right (26) post in the section becomes substantially continuously smaller as a function of the distance to the lower side (22) of the feed barrier (21).

4. Feed barrier according to claim 2 or 3, wherein in the closed position the course of the section of the left (25) and right (26) post also comprises a component that is oriented substantially transverse to feed barrier (31), wherein the section runs substantially continuously as a function of the distance to the lower side of the feed barrier (31).

5. Feed barrier according to claim 1, 2, 3 or 4, wherein the left (25) and/or right (26) post is curved in three or more panes.

6. Feed barrier according to one or more of the preceding claims, wherein the feed barrier (21, 31) comprises an upper girder (28) and a lower girder (24), and wherein the left (25) and the right (26) post with their upper and lower ends are rotatably connected to the upper (28) and lower (24) girder, preferably wherein the left (25) and right (26) post at a side of the part or below the part facing the lower girder (24) in the open position are bent towards each other for forming a stop part (20) for the animal's chest, wherein the stop part (20) of the left (25) and right (26) post in closed position preferably extends substantially beyond a plane defined by the uppet (28) and lower (24) girder.

7. Feed barrier according to claim 6, wherein the part of the left (25) and right (26) post in the closed position extends substantially beyond a plane defined by the upper (28) and lower (24) girder.

8. Feed barrier according to one or more of the preceding claims, wherein the first centre line (27) is spaced apart from the second centre line (27), wherein the first centre line preferably is placed substantially parallel to the second centre line, and preferably wherein the left (25) and right (26) post comprise a substantially mirror-symmetrical curved shape with respect to each other.

9. Feed barrier according to one or more of the preceding claims, further comprising locking means (55) for detachably locking the posts (25, 26) in the closed position.

10. Feed barrier according to claim 9, wherein the left (25) and right (26) post each at an end thereof facing the locking means (55) comprises an unround part (30), preferably integrally formed with the post, wherein the locking means (55) comprise a locking girder (54), preferably wherein the locking girder (54) at a side facing the left (25) and right (26) post comprises closing means (55) for in the closed position of the left (25) and right (26) post rotation-fixedly connecting the unround ends (30) of the posts to the locking girder (54), preferably wherein the closing means comprise recesses (55) for at least partially accommodating the unround end (30) of the left (25) and/or right (26) post, preferably wherein the locking girder (54) is movable in a direction towards the left (25) and/or right (26) post for rotation-fixedly connecting the unround ends (30) of the posts to the locking girder (54), and in a direction away from the left (25) and/or right (26) post for uncoupling the unround ends (30) of the posts and the locking girder, preferably wherein the locking girder (54) extends to above the left and right post.

11. Feed barrier according to claim 10, wherein the feed barrier comprises manual operating means (58) and/or a drive for moving the locking girder (54), at least for uncoupling the unround ends (30) of the posts (25, 26) and the locking girder (54), wherein the drive preferably comprises an electric, pneumatic or hydraulic drive.

12. Feed barrier according to claim 11, wherein the manual operating means (58) and/or the drive of various feeding locations can be operated individually or can be operated jointly.

13. Feed barrier according to one or more of the claims 10-12, wherein the locking girder (54) is connected to the feed barrier so as to be movable substantially between the first and second centre line (27), preferably wherein the locking girder (54) is placed in a guide that is preferably situated substantially in between the first and second centre line (27), wherein the guide guides the movement of the locking girder (54) along a third centre line that is substantially parallel to the first and second centre line.

14. Feed barrier according to claim 13, further comprising a rail (58) extending along the feed barrier, which rail (58) is operatively connected to the locking girder (54) for from one end of the feed barrier moving the locking girder (54) along the guide away from the posts for uncoupling the posts and the locking girder.

15. Feed barrier according to one or more of the preceding claims, wherein the left (25) and right (26) post each at an end thereof comprise an unround part (30) and wherein the feed barrier comprises resistance means (62, 63) cooperating with the unround ends (30) of the left (25) and right (26) post for offering resistance to the posts rotating out of the open position, preferably wherein the resistance means (62, 63) comprise at least one bar spring abutting the unround end (30) of the left (25) and/or right (26) post, preferably wherein the unround ends (30) comprise a flattened part, and wherein the resistance means comprise at least two bar springs (62, 63) in between which the flattened end (30) of the left (25) and/or right (26) post has been placed, wherein the bar springs have been placed for exerting a pressure force substantially on either side against the post, at least when it rotates out of the open position.

## Patentansprüche

1. Fressgitter (21), das eine linke (25) und eine rechte (26) Stange umfasst, die eine Futterstelle für ein Tier begrenzen,
wobei die linke (25) und die rechte (26) Stange um eine erste bzw. eine zweite Mittellinie (27) zwischen einer offenen und einer geschlossenen Stellung drehbar sind, und
wobei die linke (25) und die rechte (26) Stange eine gebogene Form aufweisen, wobei jeweils ein Teil (231) der linken und der rechten Stange in der offenen Stellung voneinander weg gebogen sind, um einen Durchlass für den Kopf eines Tieres zu bilden, und in der geschlossenen Stellung in Richtung aufeinander zu gebogen sind, entsprechend einer Form, die im Wesentlichen an die Schulterblätter und/oder den Hals des Tieres angepasst ist.

2. Fressgitter nach Anspruch 1, wobei ein Abschnitt des Teils (231), der der Unterseite (22) des Fressgitters zugewandt ist, konkav gebogen ist.

3. Fressgitter nach Anspruch 2, wobei der Abstand zwischen der linken (25) und der rechten (26) Stange in dem Abschnitt im Wesentlichen als Funktion des Abstands zur Unterseite (22) des Fressgitters (21) kontinuierlich kleiner wird.

4. Fressgitter nach Anspruch 2 oder 3, wobei in der geschlossenen Stellung der Verlauf des Abschnitts der linken (25) und der rechten (26) Stange ferner eine Komponente umfasst, die im Wesentlichen transversal zum Fressgitter (31) ausgerichtet ist, wobei der Abschnitt im Wesentlichen als Funktion des Abstands zur Unterseite des Fressgitters (31) kontinuierlich verläuft.

5. Fressgitter nach Anspruch 1, 2, 3 oder 4, wobei die linke (25) und/oder die rechte (26) Stange in drei oder mehr Ebenen gebogen ist.

6. Fressgitter nach einem oder mehreren der vorangehenden Ansprüche, wobei das Fressgitter (21, 31) einen oberen Träger (28) und einen unteren Träger (24) umfasst, und wobei die linke (25) und die rechte (26) Stange mit ihren oberen und unteren Enden drehbar mit dem oberen (28) und dem unteren (24) Träger verbunden sind, wobei vorzugsweise die linke (25) und die rechte (26) Stange an einer Seite des Teils oder unterhalb des Teils, der dem unteren Träger (24) zugewandt ist, in der offenen Stellung in Richtung zueinander gebogen sind, um einen Stoppteil (20) für die Brust eines Tieres zu bilden, wobei der Stoppteil (20) der linken (25) und der rechten (26) Stange in der geschlossenen Stellung vorzugsweise im Wesentlichen jenseits einer Ebene verläuft, die durch den oberen (28) und den unteren (24) Träger definiert ist.

7. Fressgitter nach Anspruch 6, wobei der Teil der linken (25) und der rechten (26) Stange in der geschlossenen Stellung im Wesentlichen jenseits einer Ebene verläuft, die durch den oberen (28) und den unteren (24) Träger definiert ist.

8. Fressgitter nach einem oder mehreren der vorangehenden Ansprüche, wobei die erste Mittellinie (27) von der zweiten Mittellinie (27) beabstandet ist, wobei die erste Mittellinie vorzugsweise im Wesentlichen parallel zur zweiten Linie angeordnet ist, und wobei vorzugsweise die linke (25) und die rechte (26) Stange relativ zueinander eine im Wesentlichen spiegelsymmetrische gebogene Form aufweisen.

9. Fressgitter nach einem oder mehreren der vorangehenden Ansprüche, das ferner Verriegelungsmittel (55) umfasst zum lösbaren Verriegeln der Stangen (25, 26) in der geschlossenen Stellung.

10. Fressgitter nach Anspruch 9, wobei die linke (25) und die rechte (26) Stange jeweils an einem ihrer Enden, das den Verriegelungsmitteln (55) zugewandt ist, einen unrunden Teil (30) aufweisen, vorzugsweise integral mit der Stange ausgebildet, wobei die Verriegelungsmittel (55) einen Verriegelungsträger (54) umfassen, wobei vorzugsweise der Verriegelungsträger (54) an einer der linken (25) und rechten (26) Stange zugewandten Seite Schließmittel (55) umfasst, um in der geschlossenen Stellung der linken (25) und der rechten (26) Stange die unrunden Enden (30) der Stangen drehfest mit dem Verriegelungsträger (54) zu verbinden, wobei vorzugsweise die Schließmittel Aussparungen (55) zum wenigstens teilweisen Aufnehmen des unrunden Endes (30) der linken (25) und/oder der rechten (26) Stange aufweisen, wobei vorzugsweise der Verriegelungsträger (54) in einer Richtung zu der linken (25) und/oder der rechten (26) Stange beweglich ist, um die unrunden Enden (30) der Stangen mit dem Verriegelungsträger (54) drehfest zu verbinden, und in einer Richtung weg von der linken (25) und/oder der rechten (26) Stange beweglich ist, um die unrunden Enden (30) der Stangen und den Verriegelungsträger zu entkoppeln, und wobei sich der Verriegelungsträger (54) vorzugsweise bis oberhalb der linken und der rechten Stange erstreckt.

11. Fressgitter nach Anspruch 10, wobei das Fressgitter Handbetätigungsmittel (58) und/oder einen Antrieb zum Bewegen des Verriegelungsträgers (54) wenigstens zum Entkoppeln der unrunden Enden (30) der Stangen (25, 26) von dem Verriegelungsträger (54) umfasst, wobei der Antrieb vorzugsweise einen elektrischen, pneumatischen oder hydraulischen Antrieb umfasst.

12. Fressgitter nach Anspruch 11, wobei die Handbetätigungsmittel (58) und/oder der Antrieb von verschiedenen Futterstellen einzeln betätigt werden können oder gemeinsam betätigt werden können.

13. Fressgitter nach einem oder mehreren der Ansprüche 10 bis 12, wobei der Verriegelungsträger (54) so mit dem Fressgitter verbunden ist, dass er im Wesentlichen zwischen der ersten und der zweiten Mittellinie (27) beweglich ist, wobei vorzugsweise der Verriegelungsträger (54) in einer Führung angeordnet ist, die vorzugsweise im Wesentlichen zwischen der ersten und der zweiten Mittellinie (27) angeordnet ist, wobei die Führung die Bewegung des Verriegelungsträgers (54) längs einer dritten Mittellinie führt, die im Wesentlichen parallel zu der ersten und zu der zweiten Mittellinie verläuft.

14. Fressgitter nach Anspruch 13, das ferner eine Schiene (58) umfasst, die sich längs des Fressgitters erstreckt, wobei die Schiene (58) mit dem Verriegelungsträger (54) operativ verbunden ist, um von einem Ende des Fressgitters her den Verriegelungsträger (54) längs der Führung von den Stangen weg zu bewegen, um die Stangen und den Verriegelungsträger zu entkoppeln.

15. Fressgitter nach einem oder mehreren der vorangehenden Ansprüche, wobei die linke (25) und die rechte (26) Stange jeweils an einem ihrer Enden einen unrunden Teil (30) umfassen, und wobei das Fressgitter Widerstandsmittel (62, 63) umfasst, die mit den unrunden Enden (30) der linken (25) und der rechten (26) Stange zusammenwirken, um einen Widerstand für die sich aus der offenen Stellung drehenden Stangen zu bieten, wobei vorzugsweise die Widerstandsmittel (62, 63) wenigstens eine Stabfeder umfassen, die am unrunden Ende (30) der linken (25) und/oder der rechten (26) Stange anliegt, wobei vorzugsweise die unrunden Enden (30) einen abgeflachten Teil aufweisen, und wobei die Widerstandsmittel wenigstens zwei Stabfedern (62, 63) umfassen, zwischen denen das abgeflachte Ende (30) der linken (25) und/oder der rechten (26) Stange platziert ist, wobei die Stabfedern so platziert sind, dass im Wesentlichen auf jeder Seite eine Druckkraft gegen die Stange wenigstens dann ausgeübt wird, wenn sie sich aus der offenen Stellung dreht.

## Revendications

1. Barrière (21) d'alimentation comprenant un poteau (25) gauche et un poteau (26) droit délimitant un emplacement d'alimentation pour un animal,
dans laquelle le poteau (25) gauche et le poteau (26) droit peuvent tourner autour d'une première et d'une deuxième ligne (27) centrale, respectivement, entre une position ouverte et une position fermée, et
dans laquelle le poteau (25) gauche et le poteau (26) droit ont une forme incurvée, dans laquelle une partie (231) du poteau gauche et du poteau droit dans la position ouverte sont pliées à distance l'une de l'autre afin de former un passage pour la tête de l'animal, et dans la position fermée sont pliées l'une vers l'autre selon une forme sensiblement adaptée aux omoplates et/ou au cou de l'animal.

2. Barrière d'alimentation selon la revendication 1, dans laquelle une section de la partie (231) orientée en face du côté (22) inférieur de la barrière d'alimentation est pliée de manière concave.

3. Barrière d'alimentation selon la revendication 2, dans laquelle la distance entre le poteau (25) gauche et le poteau (26) droit dans la section se rétrécit de manière sensiblement continue en fonction de la distance jusqu'au côté (22) inférieur de la barrière (21) d'alimentation.

4. Barrière d'alimentation selon la revendication 2 ou 3, dans laquelle dans la position fermée, le tracé de la section du poteau (25) gauche et du poteau (26) droit comprend également un composant qui est orienté de manière sensiblement transversale par rapport à la barrière (31) d'alimentation, dans laquelle la section s'étend de manière sensiblement continue en fonction de la distance jusqu'au côté inférieur de la barrière (31) d'alimentation.

5. Barrière d'alimentation selon la revendication 1, 2, 3 ou 4, dans laquelle le poteau (25) gauche et le poteau (26) droit est incurvé dans trois plans ou plus.

6. Barrière d'alimentation selon une ou plusieurs des revendications précédentes, dans laquelle la barrière (21, 31) d'alimentation comprend une poutrelle (28) supérieure et une poutrelle (24) inférieure et dans laquelle le poteau (25) gauche et le poteau (26) droit avec leurs extrémités supérieure et inférieure sont raccordés de manière rotative à la poutrelle (28) supérieure et à la poutrelle (24) inférieure, de préférence dans laquelle le poteau (25) gauche et le poteau (26) droit sur un côté de la partie ou au-dessous de la partie faisant face à la poutrelle (24) inférieure, dans la position ouverte sont pliés l'un vers l'autre pour former une partie (20) de butée pour le poitrail de l'animal, dans laquelle la partie (20) de butée du poteau (25) gauche et du poteau (26) droit dans la position fermée s'étend de préférence sensiblement au-delà d'un plan défini par la poutrelle (28) supérieure et la poutrelle (24) inférieure.

7. Barrière d'alimentation selon la revendication 6, dans laquelle la partie du poteau (25) gauche et du poteau (26) droit dans la position fermée s'étend sensiblement au-delà d'un plan défini par la poutrelle (28) supérieure et la poutrelle (24) inférieure.

8. Barrière d'alimentation selon une ou plusieurs des revendications précédentes, dans laquelle la première ligne (27) centrale est espacée de la deuxième ligne (27) centrale, dans laquelle la première ligne centrale est de préférence placée de manière sensiblement parallèle à la deuxième ligne centrale et de préférence dans laquelle le poteau (25) gauche et le poteau (26) droit comprennent une forme incurvée symétriquement sensiblement en miroir l'un par rapport à l'autre.

9. Barrière d'alimentation selon une ou plusieurs des revendications précédentes, comprenant en outre des moyens (55) de blocage pour bloquer de manière détachable les poteaux (25, 26) dans la position fermée.

10. Barrière d'alimentation selon la revendication 9, dans laquelle le poteau (25) gauche et le poteau (26) droit chacun au niveau de son extrémité faisant face aux moyens (55) de blocage, comprend une partie (30) non arrondie de préférence formée de manière solidaire avec le poteau, dans laquelle les moyens (55) de blocage comprennent une poutrelle (54) de blocage, de préférence dans laquelle la poutrelle (54) de blocage au niveau d'un côté faisant face au poteau (25) gauche et au poteau (26) droit comprend des moyens (55) de fermeture pour, dans la position fermée du poteau (25) gauche et du poteau (26) droit, raccorder de manière fixe en rotation les extrémités (30) non arrondies des poteaux à la poutrelle (54) de blocage, de préférence dans laquelle les moyens de fermeture comprennent des évidements (55), pour loger au moins partiellement l'extrémité (30) non arrondie du poteau (25) gauche et/ou du poteau (26) droit, de préférence dans laquelle la poutrelle (54) de blocage est mobile dans une direction vers le poteau (25) gauche et/ou le poteau (26) droit pour raccorder de manière fixe en rotation les extrémités (30) non arrondies des poteaux à la poutrelle (54) de blocage et dans une direction à distance du poteau (25) gauche et/ou du poteau (26) droit pour découpler les extrémités (30) non arrondies des poteaux et la poutrelle de blocage, de préférence dans laquelle la poutrelle (54) de blocage s'étend depuis le dessus du poteau gauche et du poteau droit.

11. Barrière d'alimentation selon la revendication 10, dans laquelle la barrière d'alimentation comprend des moyens (58) de commande manuels et/ou un dispositif d'entraînement pour déplacer la poutrelle (54) de blocage, au moins pour découpler les extrémités (30) non arrondies des poteaux (25, 26) et la poutrelle (54) de blocage, dans laquelle le dispositif d'entraînement comprend de préférence un dispositif d'entraînement électrique, pneumatique ou hydraulique.

12. Barrière d'alimentation selon la revendication 11, dans laquelle les moyens (58) de commande manuels et/ou le dispositif d'entraînement de différents emplacements d'alimentation peuvent être actionnés individuellement ou peuvent être actionnés conjointement.

13. Barrière d'alimentation selon une ou plusieurs des revendications 10 à 12, dans laquelle la poutrelle (54) de blocage est raccordée à la barrière d'alimentation afin d'être mobile sensiblement entre la première et la deuxième ligne (27) centrale de préférence dans laquelle la poutrelle (54) de blocage est placée dans un guide qui est de préférence situé sensiblement entre la première et la deuxième ligne (27) centrale, dans laquelle le guide guide le mouvement de la poutrelle (54) de blocage le long d'une troisième ligne centrale qui est sensiblement parallèle à la première et à la deuxième ligne centrale.

14. Barrière d'alimentation selon la revendication 13, comprenant en outre un rail (58) s'étendant le long de la barrière d'alimentation, lequel rail (58) est raccordé de manière opérationnelle à la poutrelle (54) de blocage, pour déplacer, à partir d'une extrémité de la barrière d'alimentation, la poutrelle (54) de blocage le long du guide à distance des poteaux afin de découpler les poteaux et la poutrelle de blocage.

15. Barrière d'alimentation selon une ou plusieurs des revendications précédentes, dans laquelle le poteau (25) gauche et le poteau (26) droit chacun au niveau de son extrémité, comprend une partie (30) non arrondie et dans laquelle la barrière d'alimentation comprend des moyens (62, 65) de résistance coopérant avec les extrémités (30) non arrondies du poteau (25) gauche et du poteau (26) droit afin d'offrir la résistance aux poteaux tournant hors de la position ouverte, de préférence dans laquelle les moyens (62, 63) de résistance comprennent au moins un ressort à barre venant en butée contre l'extrémité (30) non arrondie du poteau (25) gauche et/ou du poteau (26) droit, de préférence dans laquelle les extrémités (30) non arrondies comprennent une partie aplatie, et dans laquelle les moyens de résistance comprennent au moins deux ressorts à barre (62, 63) entre lesquels l'extrémité (30) aplatie du poteau (25) gauche et/ou du poteau (26) droit a été placée, dans laquelle les ressorts à barre ont été placés pour exercer une force de pression sensiblement de chaque côté contre le poteau, au moins lorsqu'il tourne hors de la position ouverte.
